# EUROPEAN PATENT APPLICATION

(11) **EP 4 438 166 A1**
(43) Date of publication of application: **02.10.2024**
(21) Application number: 24160086.5
(22) Date of filing: 27.02.2024
(51) Int. Cl.: B01F 25/314, B01F 25/316, B29C 73/16

(54) **MIXING DEVICE, BOTTLE UNIT, AND PUNCTURE REPAIR KIT**

(30) Priority: 27.03.2023 JP 2023050287
(71) Applicant: Sumitomo Rubber Industries, Ltd., Kobe-shi, Hyogo 651-0072 (JP)
(72) Inventor: NOMURA, Keisuke, Kobe-shi Hyogo 651-0072 (JP); KINOHIRA, Tomokazu, Kobe-shi Hyogo 651-0072 (JP)
(74) Representative: Manitz Finsterwald Patent- und Rechtsanwaltspartnerschaft mbB

(57) **Abstract**

A mixing device 4 is for mixing a puncture repair liquid R and compressed air A, and includes a mixing chamber 8 including a top surface 8a located on an upper side when in use and a floor surface 8b located on a lower side when in use, a first inlet 9 for supplying the compressed air A to the mixing chamber 8, a second inlet 10 for supplying the puncture repair liquid R to the mixing chamber 8, and an outlet 11 for discharging a mixture of the puncture repair liquid R and the compressed air A from the mixing chamber 8. The mixing chamber 8 includes a side surface 8c connecting the floor surface 8b and the top surface 8a. Recesses 12 are formed on at least one of the surfaces 8b, 8a, and 8c so as to be recessed outward from the mixing chamber 8.

## Description

### BACKGROUND OF THE INVENTION

### Field of the Invention

The present invention relates to a mixing device for mixing a puncture repair liquid and compressed air, a bottle unit including the mixing device, and a puncture repair kit including the bottle unit.

### Background Art

Hitherto, a puncture repair kit for repairing a punctured tire has been known. For example, Japanese Laid-Open Patent Publication No. 2017-056662 proposes a puncture repair kit for repairing a punctured tire by sequentially injecting a puncture repair liquid and compressed air into the punctured tire using compressed air from a compressor.

However, the puncture repair kit of Japanese Laid-Open Patent Publication No. 2017-056662 tends to take a long time to close a punctured part with the puncture repair liquid, since the compressed air is injected after the puncture repair liquid is injected.

The present invention has been made in view of the above circumstances, and a main object of the present invention is to provide a mixing device, a bottle unit, and a puncture repair kit for performing puncture repair in a short time.

### SUMMARY OF THE INVENTION

The present invention is directed to a mixing device for mixing a puncture repair liquid and compressed air, the mixing device including: a mixing chamber including a top surface located on an upper side when in use and a floor surface located on a lower side when in use; a first inlet for supplying the compressed air to the mixing chamber; a second inlet for supplying the puncture repair liquid to the mixing chamber; and an outlet for discharging a mixture of the puncture repair liquid and the compressed air from the mixing chamber, wherein the mixing chamber includes a side surface connecting the floor surface and the top surface, and a plurality of recesses are formed on at least one of the floor surface, the top surface, and the side surface so as to be recessed outward from the mixing chamber.

As a result of having the above-described configuration, the mixing device of the present invention allows puncture repair to be performed in a short time.

### BRIEF DESCRIPTION OF THE DRAWINGS

FIG. 1 is a cross-sectional view conceptually showing an embodiment of a puncture repair kit of the present invention;
FIG. 2 is a plan view schematically showing a floor surface;
FIG. 3 is a schematic diagram of a mixing chamber of a second embodiment;
FIG. 4 is a plan view schematically showing a floor surface of the second embodiment;
FIG. 5 is a schematic diagram of a mixing chamber of a third embodiment;
FIG. 6 is a flow velocity distribution diagram of simulation results;
FIG. 7 is a graph showing the simulation results.

### DETAILED DESCRIPTION

Hereinafter, an embodiment of the present invention will be described in detail with reference to the drawings.

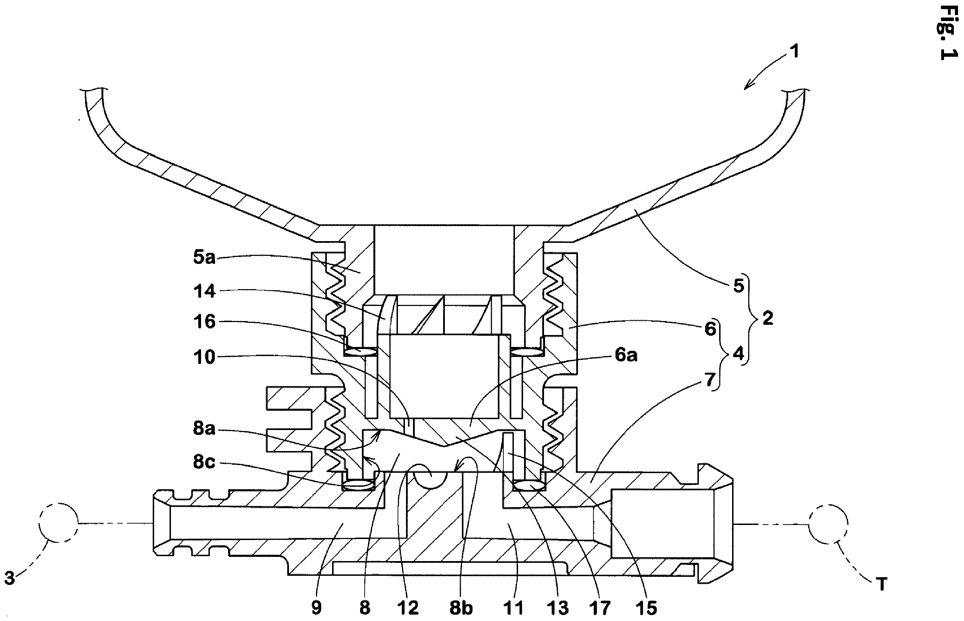

FIG. 1 is a cross-sectional view conceptually showing a puncture repair kit 1 of the present embodiment. As shown in FIG. 1, the puncture repair kit 1 is suitably used, for example, for filling an object T, such as a punctured tire, with a puncture repair liquid R and compressed air A. The puncture repair kit 1 of the present embodiment includes a bottle unit 2 and a compressor 3 for supplying the compressed air A to the bottle unit 2.

The bottle unit 2 of the present embodiment includes a mixing device 4 for mixing the puncture repair liquid R and the compressed air A, and a container 5 for containing the puncture repair liquid R. The mixing device 4 includes, for example, an adapter member 6 attached to the container 5, and a cap member 7 attached to the adapter member 6.

In such a bottle unit 2, it is easy to attach the mixing device 4 and the container 5 to each other, so that the bottle unit 2 serves to shorten the time required for puncture repair. In addition, the mixing device 4 can mix the puncture repair liquid R and the compressed air A in advance before filling the object T, thereby shortening the time required for puncture repair. The mixing device 4 is not limited to such a mode, and may be an integrally molded product in which the adapter member 6 and the cap member 7 are integrated.

The container 5 has, for example, an opening portion 5a for containing the puncture repair liquid R inside the container 5. The container 5 contains the puncture repair liquid R therein, for example, through the opening portion 5a. The opening portion 5a has, for example, a film (not shown) for holding the contained puncture repair liquid R in an airtight manner. The mixing device 4 is preferably attached to the opening portion 5a of the container 5. Such a container 5 eliminates the need to form a separate outlet for the puncture repair liquid R and serves to reduce the production cost.

The mixing device 4 includes, for example, a mixing chamber 8 formed between the adapter member 6 and the cap member 7. The mixing chamber 8 of the present embodiment includes a top surface 8a which is located on an upper side when in use, that is, when the mixing device 4 is attached to the container 5 and puncture repair is performed, and a floor surface 8b which is located on a lower side when in use. The mixing chamber 8 preferably includes a side surface 8c connecting the top surface 8a and the floor surface 8b. Such a mixing chamber 8 is suitable for ensuring a space for mixing the puncture repair liquid R and the compressed air A in advance.

The mixing chamber 8 has, for example, a circular column shape in which the top surface 8a and the floor surface 8b are circular. That is, the side surface 8c of the mixing chamber 8 preferably has a cylindrical shape. Such a mixing chamber 8 has no corners in the side surface 8c and is suitable for reducing the amount of residual matter in the mixing chamber 8.

The top surface 8a of the mixing chamber 8 is formed, for example, by a separation wall 6a of the adapter member 6. The floor surface 8b of the mixing chamber 8 is formed, for example, by the cap member 7. The side surface 8c of the mixing chamber 8 is formed, for example, by the adapter member 6. The side surface 8c of the mixing chamber 8 may be formed, for example, by the cap member 7. Such a mixing chamber 8 facilitates machining of the top surface 8a and the floor surface 8b and serves to reduce the production cost.

The mixing device 4 of the present embodiment includes a first inlet 9 for supplying the compressed air A to the mixing chamber 8, and a second inlet 10 for supplying the puncture repair liquid R to the mixing chamber 8. In such a mixing device 4, the mixing chamber 8 can be repeatedly brought into a positive pressure state and a negative pressure state by pulsation of the compressed air A supplied from the compressor 3, thereby dripping the puncture repair liquid R from the second inlet 10 into the mixing chamber 8 to produce a mixture.

At least a part of the mixture is, for example, an aerosol of the puncture repair liquid R and the compressed air A. That is, the mixing chamber 8 of the present embodiment can aerosolize at least a part of the mixture. Such a mixture can be supplied with at least a part of the puncture repair liquid R as aerosol particles of about 1 to 100 µm. Accordingly, the puncture repair kit 1 allows a punctured part to be efficiently repaired with a small amount of the puncture repair liquid R, and even if the object T is a tire in which a sound absorbing material, a sensor, etc., are placed, the puncture repair kit 1 can reduce the influence on the sound absorbing material, the sensor, etc.

The puncture repair liquid R preferably contains at least glycol. Examples of glycol include ethylene glycol, 1,3-propanediol, and propylene glycol. Such a puncture repair liquid R is suitable for efficiently repairing a punctured part even when injected in a small amount as an aerosol into the object T such as a punctured tire.

The mixing device 4 preferably includes an outlet 11 for discharging the mixture of the puncture repair liquid R and the compressed air A from the mixing chamber 8. Such a mixing device 4 can shorten the residence time of the mixture in the mixing chamber 8 by allowing the puncture repair liquid R and the compressed air A to smoothly flow thereinto and therefrom, and serves to shorten the time required for puncture repair.

The first inlet 9 and the outlet 11 are provided, for example, in the cap member 7. The first inlet 9 and the outlet 11 of the present embodiment are provided in the floor surface 8b. The second inlet 10 is provided, for example, in the separation wall 6a of the adapter member 6. The second inlet 10 of the present embodiment is provided in the top surface 8a.

Such a mixing device 4 discharges the mixture of the compressed air A and the puncture repair liquid R dripped from the second inlet 10 located on the upper side, through the outlet 11 located on the lower side, and thus can inhibit the dripped puncture repair liquid R from remaining therein, thereby efficiently producing the mixture.

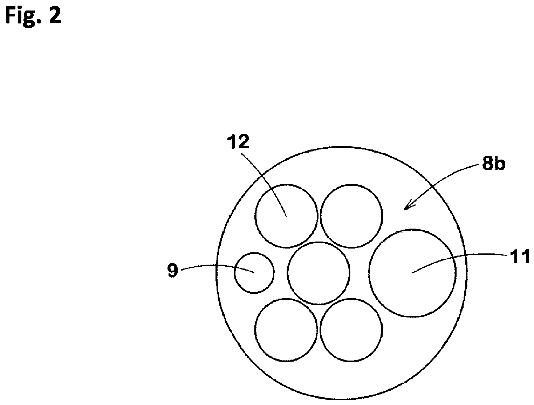

FIG. 2 is a plan view schematically showing the floor surface 8b. As shown in FIG. 1 and FIG. 2, a plurality of recesses 12 are formed on at least one of the floor surface 8b, the top surface 8a, and the side surface 8c of the present embodiment so as to be recessed outward from the mixing chamber 8. Such recesses 12 can make the flow inside the mixing chamber 8 smooth to increase the flow velocity, and can shorten the residence time of the mixture. As a result, even if the mixture is at least partially aerosolized, the mixing device 4 of the present embodiment can quickly discharge the mixture through the outlet 11, thereby suppressing aggregation of the mixture. Therefore, the mixing device 4 of the present embodiment allows puncture repair to be performed in a short time.

The plurality of recesses 12 of the present embodiment are formed on the floor surface 8b. The plurality of recesses 12 are preferably formed more at a peripheral portion than at a center portion of the floor surface 8b. Such a mixing chamber 8 can make the flow on the lower side thereof where residual matter is easily generated due to gravity smooth, thereby inhibiting the mixture from remaining therein.

In the present embodiment, the plurality of recesses 12 include at least one recess 12 provided between the first inlet 9 and the outlet 11. Such a recess 12 can make the flow of the compressed air A, flowing from the first inlet 9 to the outlet 11, smooth.

The plurality of recesses 12 include a plurality of recesses 12, in the present embodiment, two recesses 12, provided on each of one side and another side of a virtual line connecting the first inlet 9 and the outlet 11. Such recesses 12 serve to make the flow at the peripheral portion of the floor surface 8b smooth to increase the flow velocity.

Each of the plurality of recesses 12 preferably has a hemispherical shape. Such recesses 12 can inhibit residual matter from accumulating inside the recesses 12, thereby promoting discharge of the mixture. In addition, it is easy to machine such recesses 12, and the flow inside the mixing chamber 8 can be made smooth with a simple configuration.

As shown in FIG. 1, the top surface 8a of the present embodiment has a protrusion portion 13 which protrudes toward the interior of the mixing chamber 8. Such a protrusion portion 13 can provide directivity to the flow inside the mixing chamber 8 so as to promote the flow at a peripheral portion rather than at a center portion of the mixing chamber 8. Therefore, the mixing chamber 8 of the present embodiment can make the flow at the peripheral portion smooth in cooperation with the plurality of recesses 12 provided at the peripheral portion of the floor surface 8b, and can further shorten the residence time of the mixture.

The adapter member 6 has, for example, a breaking portion 14 which breaks the film (not shown) of the opening portion 5a when the adapter member 6 is attached to the opening portion 5a of the container 5. Such a breaking portion 14 can break the film of the opening portion 5a when the mixing device 4 is attached to the container 5, thereby allowing the puncture repair liquid R to be supplied to the mixing chamber 8.

The cap member 7 may be directly attached to the opening portion 5a of the container 5, for example, in an environment having a very low temperature at which it is difficult for the mixing device 4 to produce the mixture as an aerosol. The cap member 7 has a sub breaking portion 15 which breaks the film of the opening portion 5a when the cap member 7 is attached to the opening portion 5a of the container 5. The sub breaking portion 15 is provided, for example, near the opening of the outlet 11.

Such a sub breaking portion 15 can break the film of the opening portion 5a when the cap member 7 is directly attached to the container 5. In addition, the sub breaking portion 15 serves to reduce the flow path resistance in the mixing chamber 8 when the cap member 7 is attached to the adapter member 6 as the mixing device 4.

The adapter member 6 is screwed to both the opening portion 5a of the container 5 and the cap member 7, for example. The space between the adapter member 6 and the opening portion 5a is preferably sealed by a sealing member 16. The space between the adapter member 6 and the cap member 7 is sealed, for example, by a sub sealing member 17. Such an adapter member 6 is easily attached to the container 5 and to the cap member 7, and has excellent airtightness after being attached.

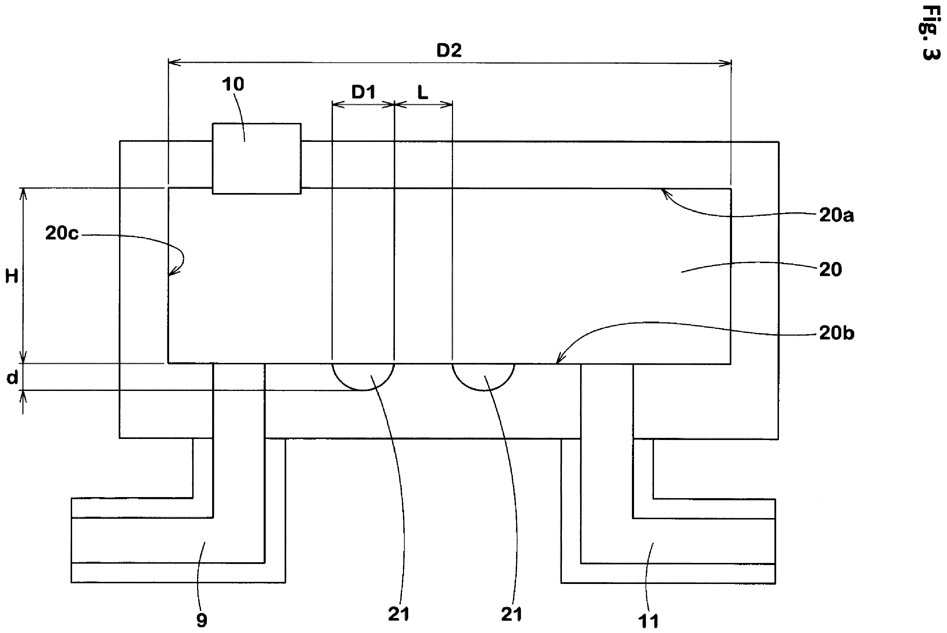

FIG. 3 is a schematic diagram of a mixing chamber 20 of a second embodiment. The same components as those in the above-described embodiment are designated by the same reference characters, and the description thereof is omitted. As shown in FIG. 3, the mixing chamber 20 of the second embodiment includes a top surface 20a which is located on an upper side when in use, a floor surface 20b which is located on a lower side when in use, and a side surface 20c connecting the top surface 20a and the floor surface 20b. Similar to the above-described mixing chamber 8, the mixing chamber 20 of the second embodiment has a circular column shape in which the top surface 20a and the floor surface 20b are circular, and the side surface 20c has a cylindrical shape.

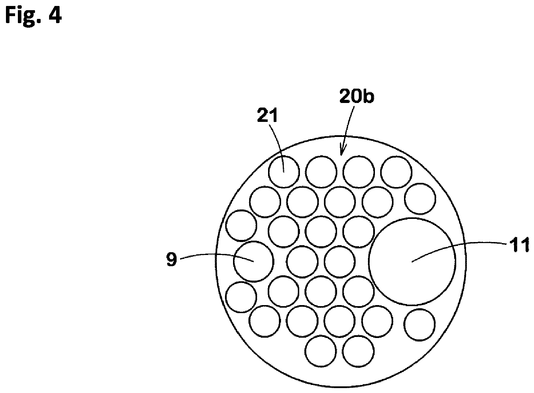

FIG. 4 is a plan view schematically showing the floor surface 20b of the second embodiment. As shown in FIG. 3 and FIG. 4, a plurality of recesses 21 are formed on the floor surface 20b of the second embodiment so as to be recessed outward from the mixing chamber 20. Such recesses 21 can make the flow inside the mixing chamber 20 smooth, and can shorten the residence time of the mixture in the mixing chamber 20.

Similar to the above-described recesses 12, each of the plurality of recesses 21 of the second embodiment preferably has a hemispherical shape. As the recesses 21 of the second embodiment, many recesses smaller than the above-described recesses 12 are provided. Such recesses 21 can inhibit residual matter from accumulating inside the recesses 12, thereby promoting discharge of the mixture.

A maximum diameter D1 of each of the plurality of recesses 21 is preferably 5% to 35% of a diameter D2 of the mixing chamber 20. When the maximum diameter D1 of each recess 21 is not less than 5% of the diameter D2 of the mixing chamber 20, the effect of increasing the flow velocity by the recess 21 can be reliably exhibited. When the maximum diameter D1 of each recess 21 is not greater than the 35% of the diameter D2 of the mixing chamber 20, the number of recesses 21 provided on the floor surface 20b can be increased, which serves to make the flow inside the mixing chamber 20 smooth.

The maximum diameter D1 of each recess 21 is preferably 0.5 to 5.0 mm. When the maximum diameter D1 of each recess 21 is not less than 0.5 mm, the effect of increasing the flow velocity by the recess 21 can be reliably exhibited. When the maximum diameter D1 of each recess 21 is not greater than 5.0 mm, the number of recesses 21 provided on the floor surface 20b can be increased, which serves to make the flow inside the mixing chamber 20 smooth. From such a viewpoint, the maximum diameter D1 of each recess 21 is more preferably 1.5 to 4.5 mm.

The diameter D2 of the mixing chamber 20 is preferably 5.0 to 50.0 mm. When the diameter D2 of the mixing chamber 20 is not less than 5.0 mm, a space required to produce the mixture as an aerosol can be formed. When the diameter D2 of the mixing chamber 20 is not greater than 50.0 mm, the mixing device 4 is inhibited from becoming excessively large in size, which serves to reduce the size of the puncture repair kit 1. From such a viewpoint, the diameter D2 of the mixing chamber 20 is more preferably 15.0 to 20.0 mm.

A maximum depth d of each of the plurality of recesses 21 is preferably 15% to 75% of a maximum height H which is the distance between the floor surface 20b and the top surface 20a of the mixing chamber 20. When the maximum depth d of each recess 21 is not less than 15% of the maximum height H of the mixing chamber 20, the effect of increasing the flow velocity by the recess 21 can be reliably exhibited. When the maximum depth d of each recess 21 is not greater than 75% of the maximum height H of the mixing chamber 20, the mixture can be inhibited from remaining at the bottom of the recess 21.

The maximum depth d of each recess 21 is preferably 0.25 to 2.50 mm. When the maximum depth d of each recess 21 is not less than 0.25 mm, the effect of increasing the flow velocity by the recess 21 can be reliably exhibited. When the maximum depth d of each recess 21 is not greater than 2.50 mm, unnecessary vortices can be inhibited from being generated inside the recess 21, thereby inhibiting the mixture from remaining at the bottom of the recess 21.

The maximum depth d of each recess 21 is preferably 30% to 100% of the maximum diameter D1 of each recess 21. Such a recess 21 can make the flow inside the mixing chamber 20 smooth. In particular, when the maximum depth d of each recess 21 is 50% of the maximum diameter D1 thereof, that is, each recess 21 is formed in a hemispherical shape, the effect of the recess 21 can be further enhanced.

The maximum height H of the mixing chamber 20 is preferably 0.5 to 20.0 mm. When the maximum height H of the mixing chamber 20 is not less than 0.5 mm, a space required to produce the mixture as an aerosol can be formed. When the maximum height H of the mixing chamber 20 is not greater than 20.0 mm, generation of vortices in the height direction can be suppressed, thereby inhibiting the residence time of the mixture from becoming longer. From such a viewpoint, the maximum height H of the mixing chamber 20 is more preferably 2.0 to 5.0 mm.

A distance L between the recesses 21 adjacent to each other is preferably smaller than the maximum diameter D1 of each recess 21. The distance L between the recesses 21 is preferably 0.0 to 10.0 mm and more preferably 0.0 to 5.0 mm. Such recesses 21 can increase the flow velocity of the mixture over the entire range of the floor surface 20b.

Although not shown, the plurality of recesses 21 may be formed, for example, on the top surface 20a. In addition, the plurality of recesses 21 may be provided, for example, on each of the floor surface 20b and the top surface 20a. Such recesses 21 may make the flow along the top surface 20a or the floor surface 20b, on which the recesses 21 are formed, smooth. In addition, the recesses 21 formed on the top surface 20a also serve to control the flow of the compressed air A supplied from the first inlet 9 which is provided in the floor surface 20b.

Although not shown, similar to the above-described top surface 8a, the top surface 20a of the second embodiment may also have a protrusion portion 13 which protrudes toward the interior of the mixing chamber 20. In the case where a plurality of recesses 21 are formed on the top surface 20a, for example, the plurality of recesses 21 may be formed on the protrusion portion 13, and the protrusion portion 13 may be provided at the floor surface 20b. Such a protrusion portion 13 can increase the flow at a peripheral portion of the mixing chamber 20, and serves to shorten the residence time of the mixture in cooperation with the many recesses 21 provided on the peripheral portion.

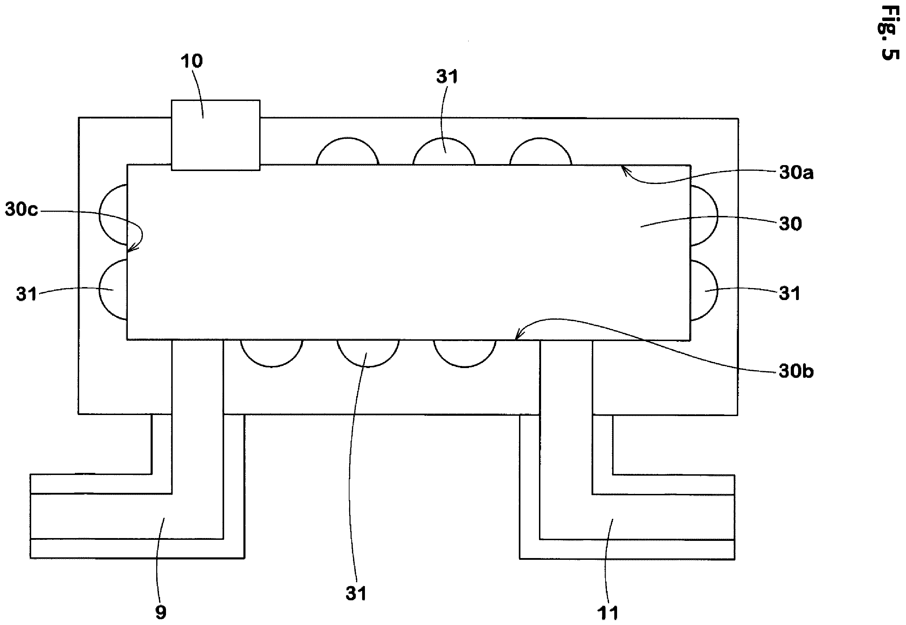

FIG. 5 is a schematic diagram of a mixing chamber 30 of a third embodiment. The same components as those in the above-described embodiments are designated by the same reference characters, and the description thereof is omitted. As shown in FIG. 5, the mixing chamber 30 of the third embodiment includes a top surface 30a which is located on an upper side when in use, a floor surface 30b which is located on a lower side when in use, and a side surface 30c connecting the top surface 30a and the floor surface 30b. Similar to the above-described mixing chamber 8, the mixing chamber 30 of the third embodiment has a circular column shape in which the top surface 30a and the floor surface 30b are circular, and the side surface 30c has a cylindrical shape.

A plurality of recesses 31 are formed on at least one, in the third embodiment, all, of the floor surface 30b, the top surface 30a, and the side surface 30c so as to be recessed outward from the mixing chamber 30. Such a mixing chamber 30 can make the flow along the floor surface 30b, the top surface 30a, and the side surface 30c smooth, and can further shorten the residence time of the mixture in the mixing chamber 30.

Although not shown, the mixing chamber 30 of the third embodiment may also have a protrusion portion 13 formed at at least one of the top surface 30a and the floor surface 30b. Such a protrusion portion 13 can increase the flow at a peripheral portion of the mixing chamber 30, and serves to shorten the residence time of the mixture in cooperation with the many recesses 31 provided on the peripheral portion.

Although the particularly preferred embodiments of the present invention have been described in detail above, the present invention is not limited to the above-described embodiments, and various modifications can be made to implement the present invention.

### EXAMPLES

Examples of a mixing device having a basic structure based on FIG. 3 and FIG. 4 were modeled according to Table 1, and a mixing device having no recesses was modeled as a comparative example. Using each modeled mixing device, the flow of a mixture in the mixing chamber was simulated, and the ratio of a puncture repair liquid reaching the outlet to the puncture repair liquid in a supplied mixture was calculated. STAR-CCM+16.06.008-R8 from Siemens was used for the simulation.

**[Table 1]**

| | Comp. Ex. | Ex. 1 | Ex. 2 | Ex. 3 | Ex. 4 |
|---|---|---|---|---|---|
| Ratio D1/D2 (%) of maximum diameter D1 of each recess to diameter D2 of mixing chamber | - | 11 | 11 | 11 | 21 |
| Ratio d/H (%) of maximum depth d of each recess to maximum height H of mixing chamber | - | 35 | 69 | 69 | 69 |
| Ratio L/D1 (%) of distance L between recesses to maximum diameter D1 of each recess | - | 10 | 10 | 30 | 5 |
| Ratio d/D1 (%) of maximum depth d of each recess to maximum diameter D1 of each recess | - | 50 | 100 | 100 | 50 |

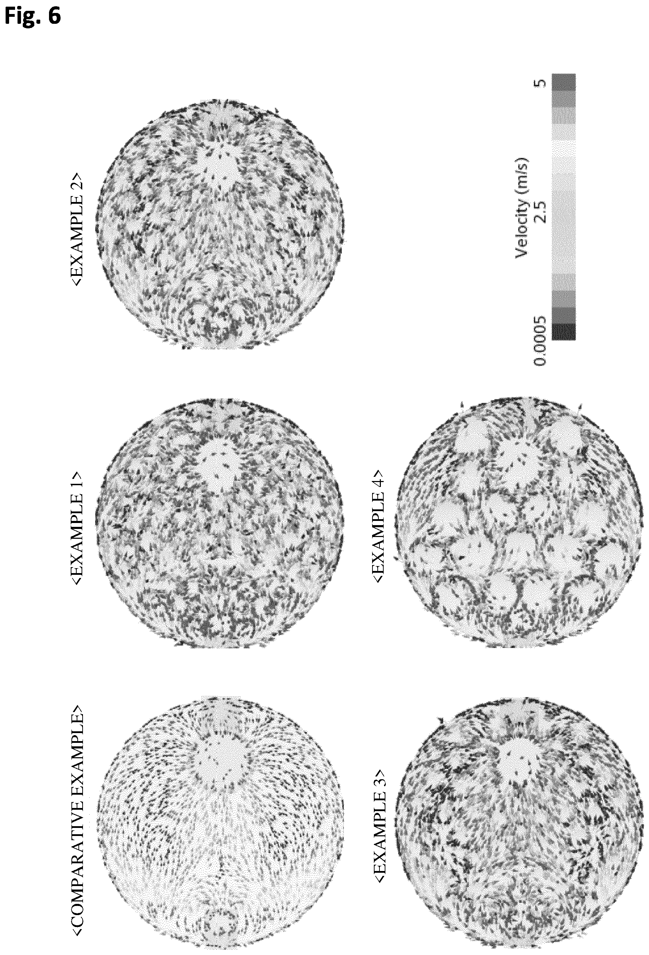

FIG. 6 is a flow velocity distribution diagram of the simulation results. As shown in FIG. 6, as a result of the simulation, it is confirmed that the mixing device of each Example has an improved internal flow velocity as compared to the comparative example, and allows puncture repair to be performed in a short time.

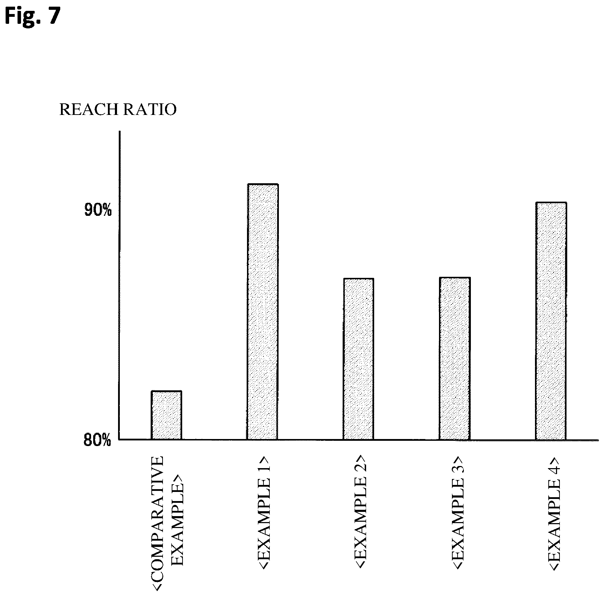

FIG. 7 is a graph showing the simulation results. In FIG. 7, the horizontal axis indicates each Example and the comparative example corresponding to FIG. 6, and the vertical axis indicates the ratio of the puncture repair liquid reaching the outlet to the puncture repair liquid in the supplied mixture. As shown in FIG. 7, as a result of the simulation, it is confirmed that the mixing device of each Example has a larger ratio of the puncture repair liquid reaching the outlet than the comparative example, and allows puncture repair to be performed in a short time.

### [Additional Note]

The present invention is as follows.

### [Present Invention 1]

A mixing device for mixing a puncture repair liquid and compressed air, the mixing device including:
a mixing chamber including a top surface located on an upper side when in use and a floor surface located on a lower side when in use;
a first inlet for supplying the compressed air to the mixing chamber;
a second inlet for supplying the puncture repair liquid to the mixing chamber; and
an outlet for discharging a mixture of the puncture repair liquid and the compressed air from the mixing chamber, wherein
the mixing chamber includes a side surface connecting the floor surface and the top surface, and
a plurality of recesses are formed on at least one of the floor surface, the top surface, and the side surface so as to be recessed outward from the mixing chamber.

### [Present Invention 2]

The mixing device according to Present Invention 1, wherein each of the plurality of recesses has a hemispherical shape.

### [Present Invention 3]

The mixing device according to Present Invention 2, wherein
the mixing chamber has a circular column shape in which the floor surface and the top surface are circular, and
a maximum diameter of each of the plurality of recesses is 5% to 35% of a diameter of the mixing chamber.

### [Present Invention 4]

The mixing device according to any one of Present Inventions 1 to 3, wherein a maximum depth of each of the plurality of recesses is 15% to 75% of a maximum height of the mixing chamber.

### [Present Invention 5]

The mixing device according to any one of Present Inventions 1 to 4, wherein the plurality of recesses are formed on the floor surface.

### [Present Invention 6]

The mixing device according to Present Invention 5, wherein
the first inlet and the outlet are provided in the floor surface, and
the plurality of recesses include at least one recess provided between the first inlet and the outlet.

### [Present Invention 7]

The mixing device according to any one of Present Inventions 1 to 6, wherein the top surface has a protrusion portion which projects toward an interior of the mixing chamber.

### [Present Invention 8]

The mixing device according to any one of Present Inventions 1 to 4, wherein the plurality of recesses are formed on the top surface.

### [Present Invention 9]

The mixing device according to any one of Present Inventions 1 to 4, wherein the plurality of recesses are provided on each of the floor surface and the top surface.

### [Present Invention 10]

A bottle unit including:
the mixing device according to any one of Present Inventions 1 to 9; and
a container for containing the puncture repair liquid, wherein
the container has an opening portion for containing the puncture repair liquid inside the container, and
the mixing device is attached to the opening portion.

### [Present Invention 11]

A puncture repair kit including:
the bottle unit according to Present Invention 10; and
a compressor for supplying the compressed air.

## Claims

1. A mixing device (4) for mixing a puncture repair liquid (R) and compressed air (A), the mixing device (4) comprising:
a mixing chamber (8, 20, 30) including a top surface (8a, 20a, 30a) located on an upper side when in use and a floor surface (8b, 20b, 30b) located on a lower side when in use;
a first inlet (9) for supplying the compressed air (A) to the mixing chamber (8, 20, 30);
a second inlet (10) for supplying the puncture repair liquid (R) to the mixing chamber (8, 20, 30); and
an outlet (11) for discharging a mixture of the puncture repair liquid (R) and the compressed air (A) from the mixing chamber (8, 20, 30), wherein
the mixing chamber (8, 20, 30) includes a side surface (8c, 20c, 30c) connecting the floor surface (8b, 20b, 30b) and the top surface (8a, 20a, 30a), and
a plurality of recesses (12, 21, 31) are formed on at least one of the floor surface (8b, 20b, 30b), the top surface (8a, 20a, 30a), and the side surface (8c, 20c, 30c) so as to be recessed outward from the mixing chamber (8, 20, 30).

2. The mixing device (4) according to claim 1, wherein each of the plurality of recesses (12, 21, 31) has a hemispherical shape.

3. The mixing device (4) according to claim 2, wherein
the mixing chamber (20) has a circular column shape in which the floor surface (20b) and the top surface (20a) are circular, and
a maximum diameter (D1) of each of the plurality of recesses (21) is 5% to 35% of a diameter (D2) of the mixing chamber (20).

4. The mixing device (4) according to any one of claims 1 to 3, wherein a maximum depth (d) of each of the plurality of recesses (21) is 15% to 75% of a maximum height (H) of the mixing chamber (20).

5. The mixing device (4) according to any one of claims 1 to 4, wherein the plurality of recesses (12, 21, 31) are formed on the floor surface (8b, 20b, 30b).

6. The mixing device (4) according to claim 5, wherein
the first inlet (9) and the outlet (11) are provided in the floor surface (8b, 20b, 30b), and
the plurality of recesses (12, 21, 31) include at least one recess (12, 21, 31) provided between the first inlet (9) and the outlet (11).

7. The mixing device (4) according to any one of claims 1 to 6, wherein the top surface (8a, 20a, 30a) has a protrusion portion (13) which projects toward an interior of the mixing chamber (8, 20, 30).

8. The mixing device (4) according to any one of claims 1 to 4, wherein the plurality of recesses (12, 21, 31) are formed on the top surface (8a, 20a, 30a).

9. The mixing device (4) according to any one of claims 1 to 4, wherein the plurality of recesses (12, 21, 31) are provided on each of the floor surface (8b, 20b, 30b) and the top surface (8a, 20a, 30a).

10. A bottle unit (2) comprising:
the mixing device (4) according to any one of claims 1 to 9; and
a container (5) for containing the puncture repair liquid (R), wherein
the container (5) has an opening portion (5a) for containing the puncture repair liquid (R) inside the container (5), and
the mixing device (4) is attached to the opening portion (5a).

11. A puncture repair kit (1) comprising:
the bottle unit (2) according to claim 10; and
a compressor (3) for supplying the compressed air (A).
